Europäisches Patentamt

European Patent Office

Office européen des brevets

(19)

(11) Veröffentlichungsnummer: **0 364 575**

**A1**

(12) **EUROPÄISCHE PATENTANMELDUNG**
veröffentlicht nach Art. 158 Abs. 3
**EPÜ**

(21) Anmeldenummer: 87907636.2

(22) Anmeldetag: 23.07.87

(86) Internationale Anmeldenummer:
PCT/SU87/00081

(87) Internationale Veröffentlichungsnummer:
WO 89/00926 (09.02.89 89/04)

(51) Int. Cl.⁵: **B60G 5/04**

(43) Veröffentlichungstag der Anmeldung:
25.04.90 Patentblatt 90/17

(84) Benannte Vertragsstaaten:
**DE FR GB IT SE**

(71) Anmelder: **KIEVSKY**
**INZHENERNO-STROITELNY INSTITUT**
**Vozdukhoflotsky pr., 31**
**Kiev 252037(SU)**

(72) Erfinder: **AZAMATOV, Ramil Abdreevich**
**Novy Gorod, 17/03-98**
**Naberezhnye Chelny, 423823(SU)**
Erfinder: **ZAMITTER, Mikhail Naumovich**
**ul. Aviakonstruktora Antonova, 2/32-4-18**
**Kiev, 252043(SU)**
Erfinder: **ZEMA, Evgeny Mikhailovich**
**ul. Chekhova, 1b-1 Dnepropetrovskaya obl.**
**Sinelnikovo, 323110(SU)**
Erfinder: **NEDOREZOV, Vladimir Afanasievich**
**ul. Chekhova, 1-2 Dnepropetrovskaya obl.**
**Sinelnikovo, 323110(SU)**
Erfinder: **OBLOVATSKY, Anatoly**
**Konstantinovich**
**ul. Mira, 33-10 Dnepropetrovskaya obl.**
**Sinelnikovo, 323110(SU)**
Erfinder: **SMIRNOV, Igor Gennadievich**
**Novy Gorod, 47/25-167**
**Naberezhnye Chelny, 423821(SU)**

(74) Vertreter: **Nix, Frank Arnold, Dr.**
**Kröckelbergstrasse 15**
**D-6200 Wiesbaden(DE)**

(54) **AUSGLEICHSAUFHÄNGUNG FÜR HINTEREINANDER ANGEORDNETE FAHRZEUGRÄDER.**

(57) Die Tandemabfederung hintereinander angeordneter Räder eines einen Rahmen (I) mit Achsbrücken (2) besitzenden Fahrzeuges enthält mit ihnen verbundene Reaktionsstangen (17, 18, 19, 20), minde- stens ein Paar zweiarmiger Hebel (3), deren jeder mit dem Rahmen (I) und über einen seiner Arme (4) mit der entsprechenden Achsbrücke (2) durch ein Mittel (8) zum Übertragen statischer und dynami-

Xerox Copy Centre

scher Belastungen mechanisch verbunden ist. Am anderen Arm (5) des entsprechenden zweiarmigen Hebels (3) sind bügelförmige Plattenfedern (22, 23) eines entsprechenden Mittels (21) zum Dämpfen dynamischer Belastung angelenkt.

FIG. 1

TANDEMABFEDERUNG HINTEREINANDER ANGEORDNETER
RÄDER EINES FAHRZEUGES

## Gebiet der Technik

Die vorliegende Erfindung bezieht sich auf Einrichtungen zum Dämpfen dynamischer Belastungen und betrifft insbesondere Tandemabfederungen hintereinander angeordneter Räder eines Fahrzeuges.

## Zugrundeliegender Stand der Technik

Heutzutage steigen im Zusammenhang mit dem Anwachsen der Anzahl von Fahrzeugen und der Erweiterung ihrer Vielfalt und funktionellen Möglichkeiten die Forderungen an den Aufbau von Dämpfungsaufhängungen, beispielsweise an hebelgesteuerte Tandemabfederungen.

Es ist eine Tandemabfederung für hintereinander angeordnete Räder eines einen Rahmen mit Achsbrücken besitzenden Fahrzeuges bekannt (GB, B, 1374548), die mindestens ein Paar zweiarmiger Hebel, deren jeder mit dem Rahmen und mit der entsprechenden Achsbrücke des Fahrzeuges mechanisch verbunden ist, Mittel zum Dämpfen dynamischer Belastungen, deren jedes an einen der Arme des entsprechenden zweiarmigen Hebels angelenkt ist, sowie Reaktionsstangen enthält, deren jede mit einem ihrer Enden mit dem Rahmen und mit dem anderen Ende mit der entsprechenden Achsbrücke des Fahrzeuges verbunden ist.

In der bekannten Aufhängung enthält das Mittel zum Dämpfen dynamischer Belastungen eine zylindrische Schraubendruckfeder, deren Enden mit den entsprechenden Armen der zweiarmigen Hebel mechanisch verbunden sind.

Da aber die Arme des zweiarmigen Hebels bei dieser Aufhängung eine beträchtliche Steifigkeit besitzen, muß die zylindrische Schraubendruckfeder beim Heben der Achsbrücke die vollständige Dämpfung aller dynamischer Be-

lastungen sicherstellen, weswegen die elastische Aufhängungskennlinie linear ist.

Außerdem sorgt die zylindrische Schraubendruckfeder in der bekannten Aufhängung für die Dämpfung nur solcher dynamischen Belastungen, die bei dem Arbeitsgang der Aufhängung entstehen, wodurch die Dämpfung beim Entspannungsgang aufkommender dynamischer Belastungen beeinträchtigt wird.

## Offenbarung der Erfindung

Der Erfindung wurde die Aufgabe zugrundegelegt, eine Tandemabfederung hintereinander angeordneter Räder eines Fahrzeuges zu schaffen, die derartige Zusatzmittel sowie Mittel zum Dämpfen dynamischer Belastungen besitzt, welche es gestatten, die Zuverlässigkeit der Aufhängung und die Leichtgängigkeit des Fahrzeuges zu erhöhen.

Diese Aufgabe wird dadurch gelöst, daß eine Tandemabfederung für hintereinander angeordnete Räder eines einen Rahmen mit Achsbrücken besitzenden Fahrzeuges, die mindestens ein Paar zweiarmiger Hebel, deren jeder mit dem Rahmen und mit der entsprechenden Achsbrücke des Fahrzeuges mechanisch verbunden ist, Mittel zum Dämpfen dynamischer Belastungen, deren jedes an einen der Arme des entsprechenden zweiarmigen Hebels angelenkt ist, sowie Reaktionsstangen enthält, deren jede mit einem ihrer Enden mit dem Rahmen und mit dem anderen Ende mit der entsprechenden Achsbrücke des Fahrzeuges verbunden ist, erfindungsgemäß zusätzlich eine der Anzahl der zweiarmigen Hebel gleiche Anzahl von Mitteln zum Übertragen statischer und dynamischer Belastungen beim Zusammenwirken jeder Achsbrücke des Fahrzeuges mit dem entsprechenden Mittel zum Dämpfen dynamischer Belastungen über den anderen Arm des zweiarmigen Hebels besitzt, deren jedes mit der entsprechenden Achsbrücke des Fahrzeuges und mit dem zweiten der genannten Arme des zweiarmigen Hebels mechanisch verbunden ist, wobei jedes Mittel zum Dämpfen dy-

namischer Belastungen zwei bügelförmige Plattenfedern zum Sicherstellen einer ständigen Berührung jedes Mittels zum Übertragen statischer und dynamischer Belastungen mit der entsprechenden Achsbrücke umfaßt, indem jede Plattenfeder an den ersten der genannten Arme des entsprechenden zweiarmigen Hebels angelenkt ist.

Die bügelförmigen Plattenfedern in der Balanceaufhängung können zweckmäßigerweise zueinander parallel angeordnet sein und die Enden jeder von ihnen an die entsprechenden zweiarmigen Hebel des entsprechenden Paares der zweiarmigen Hebel angelenkt sein.

Es ist erwünscht, daß die bügelförmigen Plattenfedern in der Balanceaufhängung hintereinander angeordnet sind, wobei das eine Ende einer von ihnen mit dem näherliegenden Ende der anderen mechanisch verbunden ist und ihre anderen Enden an die entsprechenden zweiarmigen Hebel des entsprechenden Paares von zweiarmigen Hebeln angelenkt sind.

Es ist vorteilhaft, daß jedes Mittel zum Übertragen statischer und dynamischer Belastungen in der Balanceaufhängung einen Satz von Blattfedern, bei denen die einen Enden an der entsprechenden Achsbrücke des Fahrzeuges liegen, eine Nut, die im Körper des ersten der genannten Arme des zweiarmigen Hebels eingearbeitet ist und in der anderen Enden der Blattfedern aus dem Blattfedersatz untergebracht sind, sowie eine Auflage enthält, die an diesen Enden der Blattfedern über der Nut aufgelegt ist.

Jedes Mittel zum Übertragen statischer und dynamischer Belastungen in der Tandemabfederung kann manchmal vorzugsweise in Form einer Lasche ausgebildet sein, deren eines Ende an die entsprechende Achsbrücke des Fahrzeuges und deren anderes Ende an den entsprechenden zweiarmigen Hebel angelenkt ist.

Die mechanische Verbindung zwischen den näherliegenden Enden der bügelförmigen Plattenfedern des Mittels zum Dämpfen dynamischer Belastungen kann in der Tandemabfederung vorteilhafterweise durch ein zusätzlich darin eingeschaltetes, an diese Enden angelenktes Fixierelement erfolgen.

Es ist erwünscht, daß das Fixierelement des Mittels zum Dämpfen dynamischer Belastungen in der Tandemabfederung in Form einer zwischen den näherliegenden Enden der bügelförmigen Plattenfedern angeordneten Leiste mit einem Vorsprung ausgebildet ist.

Die vorliegende Erfindung ermöglicht mit gleicher Effektivität das Dämpfen dynamischer Belastungen, die sowohl bei dem Arbeitsgang, als auch bei dem Entspannungsgang der Aufhängung auf das Fahrzeug einwirken, wodurch die Zuverlässigkeit der Aufhängung erhöht wird.

Darüber hinaus gewährleistet die vorliegende Erfindung die Nichtlinearität der elastischen Aufhängungskennlinie, was die Stoßfreiheit des Fahrzeuges verbessert.

## Kurze Beschreibung der Zeichnungen

Des weiteren wird die vorliegende Erfindung an Hand der Beschreibung konkreter Ausführungsbeispiele und der beigefügten Zeichnungen näher erläutert. In den Zeichnungen zeigt:

Fig. 1 die Gesamtansicht der erfindungsgemäßen Tandemabfederung hintereinander angeordneter Räder eines Fahrzeuges;

Fig. 2 die Baugruppe A der Fig. 1 in vergrößertem Maßstab mit abgenommenem Federbock (Querschnitt durch die Achsbrücke des Fahrzeuges), gemäß der Erfindung;

Fig. 3 die Ansicht in Richtung der Linie III-III der Fig. 2 (im Querschnitt);

Fig. 4 die Gesamtansicht der Tandemabfederung hintereinander angeordneter Räder eines Fahrzeuges nach Fig. 1 mit hintereinander angeordneten bügelförmigen Plattenfedern, gemäß der Erfindung;

Fig. 5 die Gesamtansicht der Tandemabfederung hintereinander angeordneter Räder eines Fahrzeuges nach Fig. 1 mit drei Achsbrücken, gemäß der Erfindung.

## Bevorzugte Ausführungsform der Erfindung

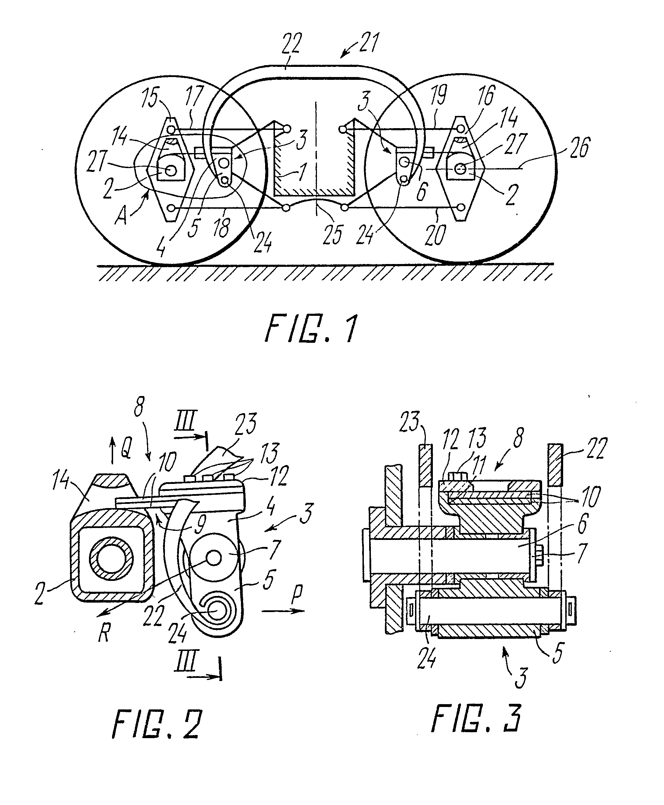

Die Tandemabfederung hintereinander angeordneter Räder eines einen Rahmen I (Fig. 1) mit zwei Achsbrücken 2 besitzenden Fahrzeuges enthält zwei zweiarmige Hebel 3. Die Füße des Hauptarmes 4 (Fig. 1, 2) und des Nebenarmes 5 jedes der Hebel 3 sind an dem Rahmen I mittels einer Achse 6 (Fig. 2, 3) angelenkt, die an dem Rahmen I (Fig. 1) mittels einer Figurscheibe 7 (Fig. 2) befestigt ist. Die Aufhängung enthält eine der Anzahl der zweiarmigen Hebel 3 (Fig. 1) gleiche Anzahl von Mitteln 8 (Fig. 2, 3) zum Übertragen statischer und dynamischer Belastungen, deren jedes einen Satz 9 von Blattfedern 10 aufweist, bei denen die einen Enden in einer im Körper des Armes 4 jedes der Hebel 3 eingearbeiteten Nut II (Fig. 3) untergebracht sind und auf welche Enden eine Auflage 12 mit ihrer profilierten Oberfläche aufgelegt ist, die an dem Arm 4 mittels Schrauben 13 befestigt ist. Die anderen Enden der Blattfedern 10 des Satzes 9 (Fig. 2) sind auf profilierten Oberflächen der Achsbrücken 2 (Fig. 1) angeordnet, auf deren jeder ein Anschlag 14 (Fig. 1,2) mit Begrenzer ausgebildet ist, um die Bewegung dieser Enden zu begrenzen. An den Achsbrücken 2 (Fig. 1) sind Federböcke 15, 16 angeordnet. An den Federbock 15 sind die einen Enden von Reaktionsstangen 17, 18 und an den Federbock 16 die einen Enden von Reaktionsstangen 19, 20 angelenkt. Die anderen Enden der Reaktionsstangen 17, 18, 19, 20 sind an dem Rahmen I angelenkt.

Die Aufhängung enthält ein Mittel 21 zum Dämpfen dynamischer Belastungen, das aus zwei bügelförmigen Plattenfedern 22, 23 (Fig. 2, 3) ausgeführt ist, die zueinander parallel angeordnet sind und deren Enden an den Arm 5 jedes der Hebel 3 mittels Bolzen 24 angelenkt sind. Die statische Lage der Aufhängung ist durch eine Linie 25 (Fig. 1) angedeutet, die zur Verbindungslinie 26 der Achsen 27 der Achsbrücken 2 senkrecht verläuft.

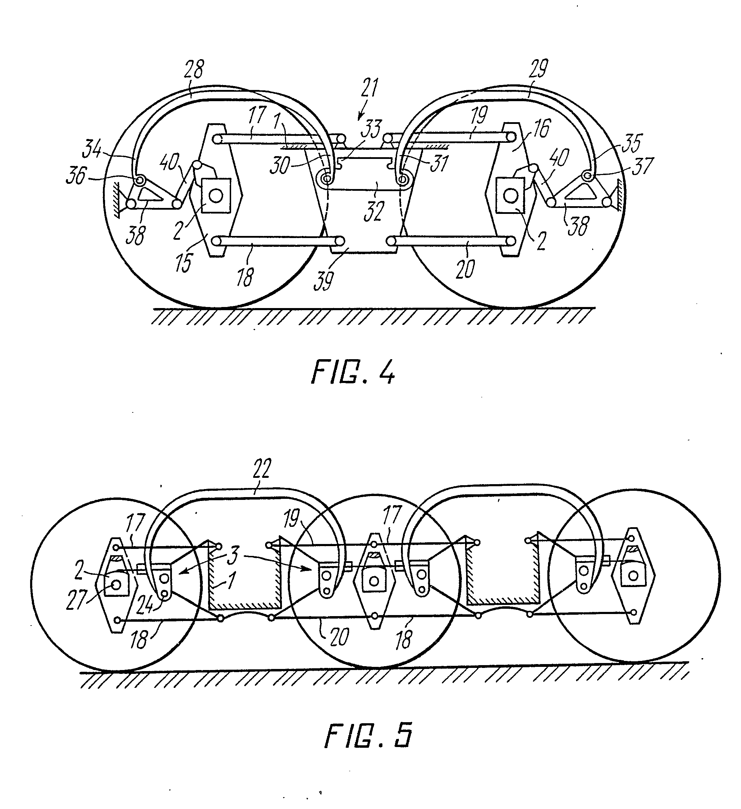

Nach einer weiteren Ausführungsform der Tandemabfederung hintereinander angeordneter Räder eines Fahrzeuges enthält das Mittel 21 zum Dämpfen dynamischer Belastungen zwei bügelförmige Plattenfedern 28, 29 (Fig. 4), die hintereinander angeordnet sind. Zwischen näherliegenden Enden 30, 31 der Federn 28 bzw. 29 ist ein Fixierelement angeordnet, das in Form einer Leiste 32 mit einem Vorsprung 33 ausgebildet ist, die an diesen Enden 30, 31 angelenkt ist. Die anderen Enden 34, 35 der Federn 28 bzw. 29 sind über Drehgelenke 36, 37 mit zugehörigen Hebeln 38 verbunden. Ähnlich wie oben beschrieben sind die einen Enden der Reaktionsstangen 17, 18 und der Reaktionsstangen 19, 20 an die Federböcke 15 bzw. 16 angelenkt, während ihre anderen Enden nach dieser Ausführungsform der Erfindung an einen am Rahmen I angebrachten Federbock 39 angelenkt sind. Jedes Mittel zum Übertragen statischer und dynamischer Belastungen ist in Form einer Lasche 40 ausgebildet, deren eines Ende an die entsprechende Achsbrücke 2 und deren zweites Ende an den zweiarmigen Hebel 38 angelenkt sind.

In Fig. 5 ist der Rahmen I eines Fahrzeuges mit drei Achsbrücken 2 schematisch dargestellt, zwischen denen die erfindungsgemäß vorgeschlagenen Tandemabfederungen angeordnet sind, die der Tandemabfederung nach Fig. 1 analog sind.

Die Tandemabfederung hintereinander angeordneter Räder eines Fahrzeuges nach Fig. 1, 2, 3 arbeitet wie folgt. In dem Falle, wenn die Aufhängung nur unter der Wirkung von Schwerkräften der Räder und Achsbrücken 2 steht, sind die Achsbrücken 2 von der statischen Lage (Linie 26) nach der Seite der Stützfläche hin verschoben, auf der sich in statischer Lage das Fahrzeug befindet. Dabei wirken die Begrenzer der Anschläge 14 auf die Blattfedern 10

des Blattfedersatzes 9 und über diese auf die zwei armigen Hebel 3 ein. Die Hebel 3 drücken, indem sie sich gleichzeitig im und entgegen dem Uhrzeigersinn drehen, die bügelförmigen Plattenfedern 22, 23 zusammen. Das von der Schwerkraft der Achsbrücken 2, der Räder und aller mit ihnen verbundenen Elemente erzeugte Moment wird durch das Moment der Reaktionskräfte der Federn 22, 23 auf die Arme 5 der Hebel 3 ausgeglichen. Dabei wird die Schwerkraft über die Achsen 6 auf den Rahmen I übertragen.

Ähnlich arbeitet die Aufhängung bei dem Entspannen im Falle der Fahrbewegung des Fahrzeuges. Dabei sorgen die auf Druck und Biegung beanspruchten Federn 22, 23 für eine effektive Dämpfung von Trägheitsbelastungen, die auf die Aufhängungselemente einwirken.

Wenn im Übergangsprozeß vom belasteten zum entlasteten Zustand die Reaktionskraft seitens der Stützfläche auf das mit einer der Achsbrücken 2 verbundene Rad einwirkt, so wird sich diese Achsbrücke 2 anheben. Ihre mit der Feder 10 des Satzes 9 in Berührung kommende Oberfläche wird auf den Arm 4 des Hebels 3 einwirken, und dieser Hebel 3 beginnt, sich um seine Drehachse im Uhrzeigersinn zu drehen. Da die Reaktionskraft an der anderen Achsbrücke 2 noch ausbleibt, so werden die vom Hebel 3 mitgerissenen Federn 22, 23 den Arm 5 des anderen Hebels 3 mit sich ziehen, und der letztere beginnt sich ebenso im Uhrzeigersinn zu drehen und mit seinem Arm 4 und mit dem daran befestigten Satz 9 auf die Oberfläche der Achsbrücke 2 einzuwirken.

Das andere Rad wird dabei solange sinken, bis es auf einen Widerstand z. B. seitens der Stützfläche auftrifft, wonach sich die Reaktionskräfte an den beiden Rädern auszugleichen beginnen und letzten Endes gleich stark werden und die Hebel 3, die Federn 22, 23 und die von den Reaktionsstangen 17, 18, 19, 20 gebildeten Gelenkparallelogramme die Lagen einnehmen, welche gegenüber der Linie 25 symmetrisch sind. Die Federn 22, 23 wirken dabei als Ausgleichselemente.

Die gleichen Ausgleichsfunktionen der Federn 22, 23 lassen sich bei beliebigen Beanspruchungsfällen der Aufhängung erkennen und sorgen für den Ausgleich der Belastung an den Rädern. Falls dies nicht erreichbar ist, was beispielsweise bei dem Geraten eines der Räder in eine Grube geschieht, so wird das zweite Rad, ohne die Haftung an der Stützfläche zu verlieren, sich solange heben, bis seine Achsbrücke 2 den Begrenzer am Rahmen I (nicht gezeichnet) des Fahrzeuges erreicht.

Unter Normalbedingungen für den Betrieb des Fahrzeuges werden die Radbelastungen in ihrem ganzen Änderungsbereich gleich sein.

Die Ausdehnverformung der Federn 22, 23 wird dem Betrag der Belastung des Fahrzeuges entsprechen, weil sich die Drehwinkel der zweiarmigen Hebel 3 mit der Zunahme der Belastung vergrößern werden.

Eine wichtige Besonderheit der erfindungsgemäß vorgeschlagen Aufhängung ist die Möglichkeit, eine vorgegebene nicht lineare Federungskennlinie zu erhalten, die für das betreffende Fahrzeug am günstigsten ist.

Dies ist erstens dadurch bedingt, daß sich die Lagen der Berührungspunkte zwischen den Oberflächen der Achsbrücken 2 und der Federn 10 des Satzes 9 bei Belastungsänderung während der Fortbewegung der Achsbrücken 2 ändern. Das Verschieben der Berührungspunkte ergibt sich sowohl aus der Wahl der anfänglichen Anstellungslage der Hebel 3, als auch aus der Wahl des Oberflächenprofils der Achsbrücken 2, auf dem die Federn 10 des Satzes 9 aufliegen. Zweitens sind die Durchbiegungen der Federn 22, 23 proportional zu dem Sinus der Winkel, unter denen die Arme 4 der Hebel 3 von der Senkrechte zur Linie 25 abweichen. Diese Längsverformungen (Durchbiegungen) ändern sich also nichtlinear je nach der Belastung, und der Grad dieser Nichtlinearität hängt davon ab, die groß der Anfangswinkel der Anstellung der Arme 5 der Hebel 3 gewählt ist.

Drittens ändert sich bei dem Ändern der Belastung die Länge der Auskragung der Federn 10 des Satzes 9. Je größerer Bereich der Federn 10 aus dem Satz 9 während des Betriebes an der Auflage 12 aufliegt, desto kleiner wird die Länge der Auskragung. Die Verformung (Durchbiegung dieser Bereiche wird sich also nichtlinear je nach dem dem gewählten Profil der mit diesen Bereichen in Berührung befindlichen Oberfläche der Auflage 12 ändern. Am günstigsten ist es, diese Oberfläche derart auszubilden, daß bei vorgegebener Belastung die elastische Verformung dieser Bereiche der Federn 10 aus dem Satz 9 deren vollständiges Anliegen an diese Oberfläche der Auflage 12 sicherstellen kann.

Die seitlichen Belastungen, die die Stützfläche oder die Begrenzer auf die Aufhängung übertragen, werden von den Rädern aufgenommen und von den Anschlägen 14 auf die Sätze 9 und über diese auf die Hebel 3 übertragen, welche diese Belastungen über die Achsen 6 zum Rahmen I weiterleiten. Gleichzeitig werden diese seitlichen Belastungen von den Trägerkonstruktionen, welche in der zur Stützfläche parallel verlaufenden Ebene gebildet sind, sowie von den Achsbrücken 2 und gepaarten Stangen 17, 18 und 19, 20 aufgenommen und auf den Rahmen 1 übertragen.

Was die Längskräfte sowie die Reaktions- und Bremsmomente anbetrifft, die die Aufhängung belasten, so werden diese auf den Rahmen I mittels derselben Reaktionsstangen 17, 18, 19, 20 übertragen, so wie dies in den anderen bekannten Ausführungen der Aufhängungen, die diese Reaktionsstangen enthalten, der Fall ist.

Die Tandemabfederung hintereinander angeordneter Räder eines Fahrzeuges nach der Fig. 4 arbeitet wie folgt.

Die Kinematik der Aufhängung ist analog der Kinematik der Aufhängung nach der Fig. 1. Das Ausgleichsverhalten der Aufhängung wird mit denselben Mitteln wie bei der Aufhängung nach der Fig. 1 sichergestellt.

Die Nichtlinearität der Federungskennlinie der Aufhängung ergibt sich nicht nur aus der eigentlichen Nichtlinearität der Federungskennlinien der bügelförmigen Plattenfedern 28, 29 selbst und ihrer größeren Nachgiebigkeit, welche auf deren Reihenverbindung beruht, sondern auch aus der nichtlinearen Abhängigkeit zwischen den Senkrechtbewegungen der Achsbrücken 2 und den Kreisbogenbewegungen der Drehgelenke 36, 37 zwischen den Enden 34, 35 der Federn 28 bzw. 29 und den zweiarmigen Hebeln 38, welche Bewegungen durch die mittels der Laschen 40 zustande kommende kinematische Verbindung zwischen diesen zweiarmigen Hebeln 38 und der jedem von ihnen zugeordneten Achsbrücke 2 ermöglicht werden. Eine Besonderheit dieser Aufhängung besteht darin, daß bei dem Entspannungsgang oder beim Lösen des Fahrzeuges von der Stützfläche aus irgendeiner Ursache (z. B. beim Aufhängen an Seilen ) die Achbrücken 2 in bezug auf den Rahmen I zu sinken streben. Dies ruft eine Zusammenwirkung zwischen den Laschen 40 und den zweiarmigen Hebeln 38 hervor, die sich zueinander im und entgegen dem Uhrzeigersinn drehen. Dabei kommen die Federn 28, 29 in eine starre Berührung mit dem Vorsprung 33 der Leiste 32 und beginnen als einheitliches elastisches Mittel zu wirken, wobei sie statische und im Falle des Entspannungsganges auch dynamische Belastungen von den Achsbrücken 2 und von den anderen an sie angeschlossenen Aufhängungselementen aufnehmen.

Die Tandemabfederung hintereinander angeordneter Räder eines Fahrzeuges, welches einen Rahmen I mit drei Achsbrücken 2 (Fig. 5) besitzt, kann als Gesamtheit von zwei Tandemabfederungen angesehen werden. Deswegen gelten die obenbeschriebenen Funktionsgrundsätze und -besonderheiten der Tandemabfederung nach Fig. I auch für diesen Fall.

Die vorliegende Erfindung gewährleistet die Erhaltung einer vorgegebenen nichtlinearen Federungskennlinie der Tandemabfederung, was die Stoßfreiheit der Fahrt des Fahrzeuges erhöht.

Weiterhin wird durch die Anwendung der vorliegenden Erfindung der Metallbedarf der Tandemabfederung wesentlich reduziert.

Darüber hinaus läßt die vorliegende Erfindung die Herstellungs- und Zusammenbautechnologie für die Tandemabfederung vereinfachen.

## Gewerbliche Anwendbarkeit

Die vorliegende Erfindung eignet sich für die Fahrzeuge, die hintereinander angeordnete Räder oder Walzen enthalten.

PATENTANSPRÜCHE

1. Tandemabfederung hintereinander angeordneter Räder eines einen Rahmen mit Achsbrücken besitzenden Fahrzeuges, enthaltend mindestens ein Paar zweiarmiger Hebel, deren jeder mit dem Rahmen und mit der entsprechenden Achsbrücke des Fahrzeuges mechanisch verbunden ist, Mittel zum Dämpfen dynamischer Belastungen, deren jedes an einem der Arme des entsprechenden zweiarmigen Hebels angelenkt ist, sowie Reaktionsstangen, deren jede mit einem ihrer Enden mit dem Rahmen und mit dem anderen Ende mit der entsprechenden Achsbrücke des Fahrzeuges verbunden ist, dadurch g e k e n n z e i c h n e t , daß sie zusätzlich eine der Anzahl der zweiarmigen Hebel (3) gleiche Anzahl von Mitteln (8) zum Übertragen statischer und dynamischer Belastungen beim Zusammenwirken jeder Achsbrücke (2) des Fahrzeuges mit dem entsprechenden Mittel (21) zum Dämpfen dynamischer Belastungen über den anderen Arm (4) des zweiarmigen Hebels (3) besitzt, deren jedes mit der entsprechenden Achsbrücke (2) des Fahrzeuges und mit dem zweiten der genannten Arme (4) des zweiarmigen Hebels (3) mechanisch verbunden ist, wobei jedes Mittel (21) zum Dämpfen dynamischer Belastungen zwei bügelförmige Plattenfedern (22,23 bzw. 28,29) zum Sicherstellen einer ständigen Berührung jedes Mittels (8) zum Übertragen statischer und dynamischer Belastungen mit der entsprechenden Achsbrücke (2) umfaßt, indem jede Plattenfeder an den ersten der genannten Arme (5) des entsprechenden zweiarmigen Hebels (3) angelenkt ist.

2. Tandemabfederung nach Anspruch 1, dadurch g e k e n n z e i c h n e t , daß die bügelförmigen Plattenfedern (22, 23) zueinander parallel angeordnet sind und daß die Enden jeder von ihnen an den entsprechenden zweiarmigen Hebeln(3) des entsprechenden Paares der zweiarmigen Hebel (3) angelenkt sind.

3. Tandemabfederung nach Anspruch I, dadurch g e - k e n n z e i c h n e t, daß die bügelförmigen Plattenfedern (28, 29) hintereinander angeordnet sind, wobei das eine Ende (30) einer von ihnen mit dem näherliegenden Ende (31) der anderen mechanisch verbunden ist, und daß ihre anderen Enden (34, 35) an den entsprechenden zweiarmigen Hebeln (38) des entsprechenden Paares von zweiarmigen Hebeln (38) angelenkt sind.

4. Tandemabfederung nach Anspruch 2, dadurch g e - k e n n z e i c h n e t, daß jedes Mittel (8) zum Übertragen statischer und dynamischer Belastungen einen Satz (9) von Blattfedern (10), bei denen die einen Enden an der entsprechenden Achsbrücke (2) des Fahrzeuges liegen, eine Nut (II), die im Körper des ersten (4) der genannten Arme (4, 5) des zweiarmigen Hebels (3) eingearbeitet ist und in der die anderen Enden der Blattfedern (10) aus dem Blattfedersatz (9) untergebracht sind, sowie eine Auflage (12) enthält, die an diesen Enden der Blattfedern (10) über der Nut (11) aufgelegt ist.

5. Tandemabfederung nach Anspruch 3, dadurch g e - k e n n z e i c h n e t, daß jedes Mittel zum Übertragen statischer und dynamischer Belastungen in Form einer Lasche (40) ausgebildet ist, deren eines Ende an der entsprechenden Achsbrücke (2) des Fahrzeuges und deren anderes Ende an dem entsprechenden zweiarmigen Hebel (38) angelenkt ist.

6. Tandemabfederung nach Anspruch 3, dadurch g e - k e n n z e i c h n e t, daß die mechanische Verbindung zwischen den näherliegenden Enden (30, 31) der bügelförmigen Plattenfedern (28, 29) des Mittels (21) zum Dämpfen dynamischer Belastungen durch ein zusätzlich darin eingeschaltetes, an diesen Enden (30, 31) angelenktes Fixierelement erfolgt.

7. Tandemabfederung nach Anspruch 6, dadurch g e - k e n n z e i c h n e t, daß das Fixierelement des Mittels (21) zum Dämpfen dynamischer Belastungen in Form einer zwischen den näherliegenden Enden (30, 31) der bügelförmigen Plattenfedern (28, 29) angeordneten Leiste (32) mit einem Vorsprung (33) ausgebildet ist.

FIG. 1

FIG. 2

FIG. 3

FIG. 4

FIG. 5

# INTERNATIONALER RECHERCHENBERICHT

| I. KLASSIFIZIERUNG DES ANMELDUNGSGEGENSTANDS (bei mehreren Klassifikationssymbolen sind alle anzugeben)[3] |
|---|
| Nach der Internationalen Patentklassifikation (IPC) oder sowohl nach der nationalen Klassifikation als auch nach der IPC |
| IPC[4] – B 60 G 5/04 |

## II. RECHERCHIERTE SACHGEBIETE

Recherchierter Mindestprüfstoff[4]

| Klassifikationssystem | Klassifikationssymbole |
|---|---|
| IPC[4] | B 60 G 5/00+ 5/04, 11/00+ 11/10 |

Recherchierte nicht zum Mindestprüfstoff gehörende Veröffentlichungen, soweit diese unter die recherchierten Sachgebiete fallen[5]

## III. ALS BEDEUTSAM ANZUSEHENDE VERÖFFENTLICHUNGEN[14]

| Art + | Kennzeichnung der Veröffentlichung,[16] mit Angabe, soweit erforderlich, der in Betracht kommenden Teile [17] | Betr. Anspruch Nr. [18] |
|---|---|---|
| A | GB, A, 1374548, (LIEBHERR-WERK EHINGEN G.m.b.H.), 20. November 1974 (20.11.74), siehe S. 1,2, Fig. 1 | 1 |
| A | SU, A1, 401546, (Golovnoe spetsializirovannoe konstruktorskoe bjuro po mashinam dlya uborki zernovykh kultur i samokhodnym shassi), 14. November 1974 (14.11.74), siehe Fig. 2 | 2 |
| A | US, A, 2665142, (A.G.Talbert), 5. Januar 1954 (05.01.54), siehe Spalte 2, Zeilen 46-56, Fig. 1,6, Spalten 3-6 | 3,6 |
| A | US, A, 4570971, (Roberto Perlini), 18. Februar 1986 (18.02.86), siehe Spalten 3,4, Fig. 2,3 | 4 |
| A | SU, A, 1053910, (Kurgansky mashinostroitelny institut), 15. November 1983 (15.11.83), siehe Spalte 2, Fig. 1 | 5 |

+ Besondere Arten von angegebenen Veröffentlichungen:[15]

"A" Veröffentlichung, die den allgemeinen Stand der Technik definiert
"E" frühere Veröffentlichung, die erst am oder nach dem Anmeldedatum erschienen ist
"L" Veröffentlichung, die aus anderen als den bei den übrigen Arten genannten Gründen angegeben ist
"O" Veröffentlichung, die sich auf eine mündliche Offenbarung, eine Benutzung, eine Ausstellung oder andere Maßnahmen bezieht

"P" Veröffentlichung, die vor dem Anmeldedatum, aber am oder nach dem beanspruchten Prioritätsdatum erschienen ist
"T" Spätere Veröffentlichung die am oder nach dem Anmeldedatum erschienen ist und mit der Anmeldung nicht kollidiert; sondern nur zum Verständnis des der Erfindung zugrundeliegenden Prinzips oder der ihr zugrundeliegenden Theorie angegeben wurde
"X" Veröffentlichung von besonderer Bedeutung

## IV. BESCHEINIGUNG

| Datum des tatsächlichen Abschlusses der Internationalen Recherche[2] | Absendedatum des internationalen Recherchenberichts[4] |
|---|---|
| 26. Januar 1988 (26.01.88) | 10. März 1988 (10.03.88) |
| Internationale Recherchenbehörde[1]<br>ISA/SU | Unterschrift des bevollmächtigten Bediensteten[20]<br>A.Korchagin |